# EUROPEAN PATENT SPECIFICATION

(11) **EP 4 324 988 B1**
(45) Date of publication and mention of the grant of the patent: **26.11.2025**
(21) Application number: 22190684.5
(22) Date of filing: 17.08.2022
(51) Int. Cl.: E02F 3/84, E02F 9/26

(54) **METHOD AND SYSTEM OF CONFIGURING A MACHINE CONTROL UNIT OF A CONSTRUCTION MACHINE**
VERFAHREN UND SYSTEM ZUM KONFIGURIEREN EINER MASCHINENSTEUERUNGSEINHEIT EINER BAUMASCHINE
PROCÉDÉ ET SYSTÈME DE CONFIGURATION D'UNE UNITÉ DE COMMANDE DE MACHINE D'UNE MACHINE DE CONSTRUCTION

(43) Date of publication of application: 21.02.2024
(73) Proprietor: Leica Geosystems Technology A/S, 5220 Odense SØ (DK)
(72) Inventor: KEAN, Michael Goulet, 5220 Odense (DK)
(74) Representative: Kaminski Harmann

(56) References cited:
- EP-A1- 3 086 196
- EP-B1- 3 194 666
- US-A1- 2019 078 292
- US-A1- 2021 246 636

## Description

The present invention generally relates to a method and system for configuring a machine control unit of a construction machine to control an earth-moving operation that comprises a multitude of phases that are to be performed consecutively, for instance for controlling a motor grader or crawler for ditch or road construction. The controlling comprises using 3D sensors to detect a current state of the earth-moving operation in order to configure the machine control unit to at least partially control the construction machine during the next phase of the earth-moving works.

It is known to use automation systems for construction machines to facilitate earth-moving operations for the operator of the machine by fully or partially controlling the machine. Existing automation systems focus primarily on a final grading pass required to cut the soil surface to the desired profile. There are two primary applications that differ based on whether the desired profile is localized relative to world coordinates ("3D system"), or the desired profile is localized relative to vehicle coordinates ("2D system"). 2D systems are simpler to work with. A soil profile is designed relative to the vehicle system and the operator is fully responsible for navigating the vehicle so that the system generates the correct surface. 3D systems require a surface design file that is created using a complex computer system. The machine can then be localized relative to the 3D plan and the surface cut correctly with a variety of possible navigation motion.

There are various measuring systems known for the specific needs in the field of construction, especially for earth-moving machines, such as excavators, graders or dozers. Such measuring systems can be used with a construction machine to build a digital 3D model of the surroundings of the machine, to detect obstacles in the surroundings of the machine, and/or to support a control of the construction machine. For example, EP 3 086 196 A1 suggests an environment detection by means of a camera system arranged on a bulldozer. The camera system uses a SLAM or SfM algorithm to generate a 3D point cloud of the environment. JP 2019 167 719 A2 discloses a 2D laser scanner by means of which a 3D model of the environment is generated when an excavator, on which the 2D scanner is mounted, is pivoting. WO 2019/197064 A1 shows a device for monitoring a construction machine environment with a ToF camera. Images generated in such a way are used for guiding an operator of the construction machine in order to control the operation of the construction machine on the construction site according to a plan.

Advances in perception sensors allow for a new interactive workflow that enables a 3D design surface to be generated in a simpler manner, resembling that of existing 2D systems. These same perception sensors allow for the machine to localize itself relative to coordinates of a design file and enable advancements in the automation of the machine so that the automation systems can be used in a wider range of operator conditions. WO 2020/126123 A2 discloses an example of a compact "reality capture device" comprising a laser scanner and at least one camera. With this reality capture device, an environment can be optically scanned and measured by means of the laser scanner emitting a laser measurement beam, e.g. using pulsed electromagnetic radiation, wherein an echo is received from a backscattering surface point of the environment and a distance to the surface point is derived and associated with an angular emission direction of the associated laser measurement beam. This way, a three-dimensional point cloud is generated. For example, the distance measurement may be based on the time of flight, the shape, and/or the phase of the pulse. For additional information, the laser scanner data is combined with camera data, in particular to provide high-resolution spectral information, e.g. by means of an RGB camera or an infrared camera. The reality capture device may be mobile and configured to provide surveying data and referencing data at the same time, e.g. wherein at least trajectory data of the device, e.g. position and/or pose data, are provided with the probing data, e.g. laser scanner data and/or camera data, such that probing data of different positions of the reality capture device can be combined into a common coordinate system. The reality capture devices can be configured to autonomously create a 3D map of a new environment, e.g. by means of a simultaneous localization and mapping (SLAM) functionality. The European patent application No. 21176387.5 discloses a similar reality capture device comprising an arrangement of time-of-flight (ToF) cameras instead of a laser scanner, wherein the ToF cameras are configured for jointly capturing 3D point cloud data of the surrounding.

EP 3 194 666 B1 discloses a guidance system for earthmoving machinery, the machinery comprising tools for forming a windrow, the system comprising a visual perception sensor for locating the windrow and means for generating control commands to cause the machine to clear the windrow.

EP 3 865 895 A1 discloses a measurement system for construction machines comprising one or more reality capture devices for capturing surroundings of the construction machine before and during earthmoving works at a construction site. US 2021/246636 A1 discloses a system with the features of the preamble of claim 1.

Some earth-moving operations comprise a multitude of phases that are to be performed consecutively, wherein the phases are at least partly iterative. One example of such an operation is "V-ditching", which is used for construction a ditch with a V-shaped profile. During consecutive passes of the construction machine, the tool is continuously lowered to perform several cuts.

It would be desirable to provide a construction site measuring system for a construction machine that facilitates performing such earth-moving operations for the operator of the construction machine, particularly by allowing a higher grade of automation in the control of the machine.

It is therefore an object of the present invention to provide an improved system and method for configuring a machine control unit of a construction machine for performing an earth-moving operation.

It is a further object of the invention to provide such a system and method that allow configuring the machine control unit to perform the earth-moving operation at least partially automatically.

It is a further object of the invention to provide such a system and method that allow configuring the machine control unit to perform at least a subset of phases of an earth-moving operation that comprising a multitude of phases that are to be performed consecutively.

At least one of these objects is achieved by the system according to claim 1, the construction machine according to claim 8, the computer-implemented method according to claim 9, the computer programme product according to claim 15 and/or the dependent claims of the present application.

A first aspect of the invention pertains to a system for configuring a machine control unit of a construction machine for performing an earth-moving operation, the earth-moving operation comprising a multitude of phases that are to be performed consecutively. Said system comprises a measuring system configured for capturing three-dimensional measuring data of a terrain in a surrounding of the construction machine in at least a first detection range, a user interface configured for receiving user input from an operator of the construction machine, and a computing unit operatively coupled at least with the measuring system, the user interface and the machine control unit. According to this aspect of the invention, the computing unit is configured for detecting elements of a previous phase of the earth-moving operation based on the three-dimensional measuring data, and, based at least on the detected elements, for configuring the machine control unit to perform the next phase of the earth-moving operation at least partially automatically.

The system comprises a context camera having a known position relative to the measuring system and/or the three-dimensional measuring data and being configured for capturing context image data of the terrain within the first detection range. The user interface is configured for displaying at least one context image based on the context image data to an operator of the construction machine, the computing unit is configured for overlaying the detected elements on the displayed context image and for receiving input from the operator related to a next phase of the earth-moving operation, and configuring the machine control unit is also based on the input from the operator.

According to some embodiments of the system, the measuring system comprises at least one measuring unit at the construction machine, each measuring unit being configured for capturing 3D point cloud data, i.e. as the three-dimensional measuring data. Each measuring unit comprises:
- at least one laser scanner,
- a plurality of ToF cameras,
- a millimetre wave radar system, and/or
- one or more stereo camera systems.

According to some embodiments, the user interface may comprise a touch-sensitive display on which the context image is displayed and on which the user input is received. The input from the operator for instance may comprise a selection of one or more of the detected elements.

According to some embodiments, the construction machine is a motor grader and the earth-moving operation comprises construction a ditch, wherein the phases are passes of the motor grader along a ditch line, including a plurality of cutting passes, and the detected elements comprise an edge and/or surface produced by a previous cutting pass. For instance, the earth-moving operation may comprise V-ditching. Optionally, the input from the operator may comprise one or more of the following:
- selecting an edge and/or surface produced by a previous cutting pass;
- selecting a cutting depth for the next pass; and/or
- selecting to maintain a parallel cut for the next pass.

In one embodiment, the input from the operator comprises selecting an edge and a surface produced by a previous cutting pass and selecting to adjust a cross slope of the surface for the next pass while maintaining the selected edge as a vertex of a plane to be shaped during the next pass.

According to some embodiments of the system, the computing unit is configured for
- receiving operator input indicating a desired line (for instance a spline), along which line the earth moving operation is desired to be performed,
- localizing the construction machine based on the three-dimensional measuring data, e.g. relative to the desired line,
- positioning the tool at the desired line, and
- performing a first phase of the multitude of phases, thereby producing detectable elements.

Optionally, the computing unit also may be configured for steering the construction machine to the desired line.

In some embodiments, the operator input comprises an offset of the desired line from a given line and the computing unit is configured to calculate the desired line based on the offset. For instance, if the given line is a spline, the computing unit may be configured to calculate another spline as the desired line based on the offset. In one example, the given line may be a line belonging to an existing ditch on a first side of the road, and the desired line is for another ditch to be constructed on the other side of the road, e.g. with the same distance to the road as the ditch on the first side.

According to some embodiments of the system, the measuring system is configured for continuously capturing the 3D measuring data and for continuously providing the captured 3D measuring data to the computing unit, wherein the computing unit is configured for continuously evaluating the received 3D measuring data for continuously detecting the elements and for continuously configuring the machine control unit while at least partially automatically performing a phase of the earth-moving operation.

A second aspect of the invention pertains to a construction machine, e.g. a grader, a dozer or an excavator, the construction machine comprising
- a tool for performing an earth-moving operation, e.g. for digging a ditch or trench,
- a control unit for at least partially controlling the earth-moving operation, and
- a system according to the first aspect of the invention, the system being operatively coupled with the control unit or comprising the control unit.

A third aspect of the invention pertains to a computer-implemented method for configuring a machine control unit of a construction machine (e.g. the construction machine according to the second aspect of the invention), for performing an earth-moving operation, the earth-moving operation comprising a multitude of phases that are to be performed consecutively. The method comprises the following steps that are performed by a computing unit (e.g. the computing unit of the system according to the first aspect of the invention):
- receiving 3D measuring data of a terrain in a surrounding of the construction machine in at least a first detection range;
- detecting elements of a previous phase of the earth-moving operation based on the 3D measuring data; and
- configuring, based at least on the detected elements, the machine control unit to at least partially perform the next phase of the earth-moving operation automatically.

The method further comprises:
- capturing context image data of the terrain within the first detection range using a context camera having a known position relative to the 3D measuring data and/or to a measuring system capturing the 3D measuring data;
- displaying at least one context image based on the context image data to an operator of the construction machine, overlaying the detected elements on the displayed context image; and
- receiving input from the operator related to a next phase of the earth-moving operation, particularly wherein the input from the operator comprises a selection of one or more of the detected elements, wherein configuring the machine control unit is also based on the input from the operator.

According to some embodiments of the method, the construction machine is a motor grader and the earth-moving operation comprises constructing a ditch, for instance by V-ditching. In this case, the phases are passes of the motor grader along a ditch line, including a plurality of cutting passes, and the detected elements comprise an edge and/or surface produced by a previous cutting pass. Optionally, the input from the operator may then comprise one or more of the following:
- selecting an edge and/or surface produced by a previous cutting pass,
- selecting to maintain a parallel cut for the next pass, and/or
- selecting a cutting depth for the next pass.

In one embodiment, the input from the operator comprises selecting an edge and a surface produced by a previous cutting pass and selecting to adjust a cross slope of the surface for the next pass while maintaining the selected edge as a vertex of a plane to be shaped during the next pass.

According to some embodiments, the method further comprises:
- receiving operator input indicating a desired line, e.g. a spline, along which line the earth moving operation is desired to be performed,
- localizing the construction machine based on the three-dimensional measuring data, particularly relative to the desired line,
- positioning the tool at the desired line, and
- performing a first phase of the multitude of phases, thereby producing detectable elements.

Optionally, the method may further comprise automatically steering the construction machine to the desired line. In one embodiment, the operator input comprises an offset of the desired line from a given line and the method comprises calculating the desired line based on the offset.

According to some embodiments of the method, the 3D measuring data is captured continuously and evaluated continuously for detecting the elements, and the machine control unit is configured continuously while at least partially automatically performing a phase of the earth-moving operation.

According to some embodiments of the method, the earth-moving operation comprises constructing a ditch, the desired line is a ditch line, e.g. a ditch edge line, the first phase is a marking pass along the ditch line, and the produced elements produced by the marking pass comprise an edge and/or surface. Optionally, the construction machine may be a motor grader, the earth-moving operation may comprise V-ditching, and/or the ditch line may be a ditch edge line, a ditch spline or a ditch edge spline.

A fourth aspect of the invention pertains to a computer programme product comprising programme code which is stored on a machine-readable medium, or being embodied by an electromagnetic wave comprising a programme code segment, and having computer-executable instructions for performing, particularly when executed on a computing unit of a system according to the first aspect of the invention, the method according to the third aspect of the invention.

By way of example only, preferred embodiments of the invention will be described more fully hereinafter with reference to the accompanying figures, wherein:
- Figs. 1a-b: show two exemplary embodiments of known construction machines for performing earth-moving operations;
- Fig. 2: illustrates an exemplary method for constructing a ditch using a motor grader;
- Figs. 3a-b: show a motor grader as an example of a construction machine, the grader comprising an exemplary embodiment of a construction site measuring system according to the invention;
- Fig. 4: shows an exemplary embodiment of a system according to the invention;
- Figs. 5a-b: show a road design comprising ditches; and
- Fig. 6: shows a flow chart illustrating steps of exemplary embodiments of a method according to the invention.

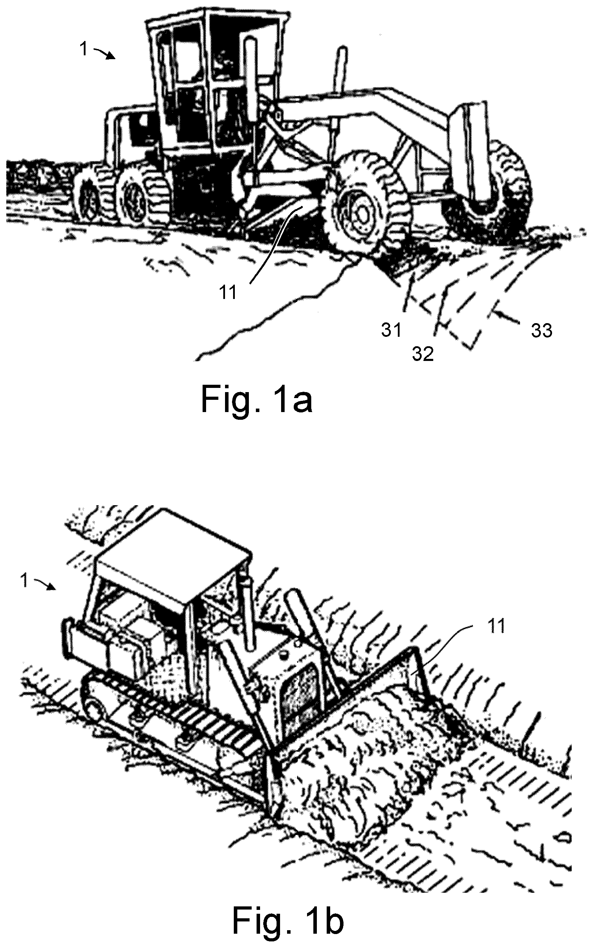

**Figures 1a and 1b** show two examples of known construction machines 1 that may be equipped with a system according to the invention. **Figure 1a** shows a motor grader using its tool 11 for digging a V-shaped ditch. This is an iterative process wherein the tool is continuously lowered to perform several cuts. These cuts include an initial light cut as a marking cut 31 and a number of subsequent heavier cuts comprising at least a first cut 32, and a final cut 33. **Figure 1b** shows a crawler (also called bulldozer or dozer) having a blade as a tool 11 for performing earth-moving works, e.g. during road construction. It is known to equip such construction machines 1 with automation systems to facilitate earth-moving operations for the operator by at least partially controlling the machine during these operations.

In the construction machines 1 shown here, i.e. in graders and crawlers, current automation systems often comprise grade control systems that can be configured to maintain a desired cross slope. This is a simple functionality that can be used by operators during road construction and ditch construction. Typical cross slope systems only control one axis of a tool motion. They act as kinematic constraints, requiring the operator to control a depth of the tool 11, navigate the machine 1, and control other tool motions, e.g. associated with material management.

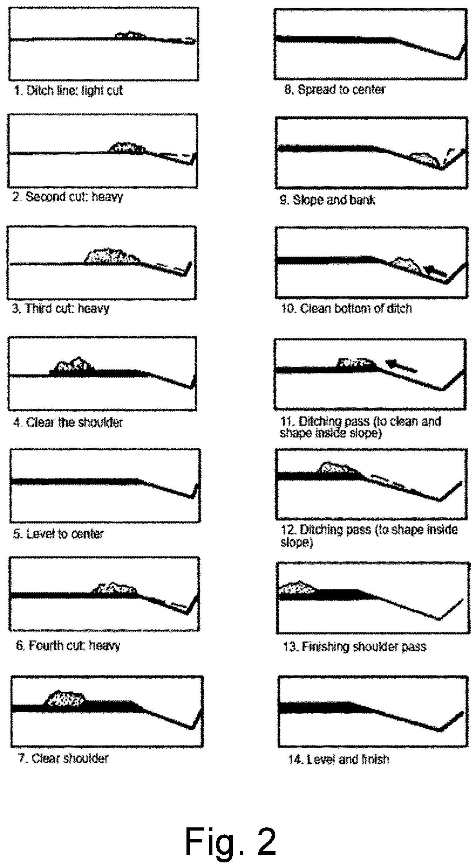

**Figure 2** illustrates an exemplary method for digging a V-shaped ditch ("V-ditching") using a motor grader as shown in **Figure 1a****.** Such a method is known per se. Currently, performing this method takes a lot of attention from the operator of the grader since controlling the grader is performed mainly manually. Known cross-slope systems may control a single actuator out of the five that are used for blade motion. Disadvantageously, this requires the operator to manage several aspects of blade control while additionally having to navigate the vehicle.

The operator of a motor grader starts with a light marking cut (see also **Figure 1a**) for marking a ditch line. The operator may then engage a known 2D cross-slope system, set the system for the desired ditch slope, and then proceed to subsequently make several cutting passes. During these passes the operator manages the load on the vehicle by adjusting the depth of cut and the angle of the blade. The angle of the blade also serves to shift material laterally along the blade and into a windrow. After several cutting passes, a significant windrow has been generated. The operator then disengages the cross-slope system and works to first shift the windrow and then spreads it thinly. Additional passes and windrow spreading operations are undertaken until one surface of the ditch is completed. The operator can once again engage the 2D cross-slope system while cutting the bank. During these passes, the soil is pushed onto the previously shaped surface. Once the embankment has been shaped, the operator once again clears the material from the ditch using the 2D cross-slope system. The cross-slope system is adjusted for a final surface cut. The windrow is then spread and shaped to the desired height and slope.

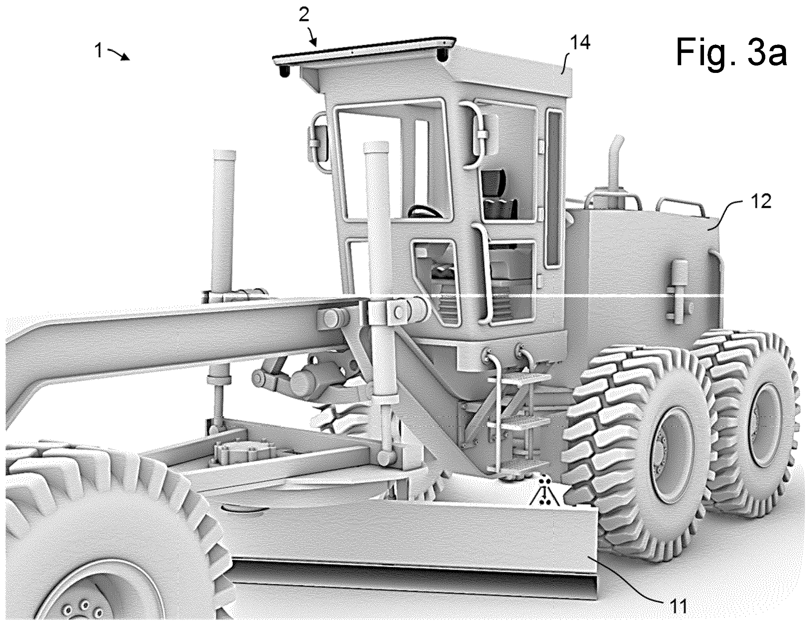

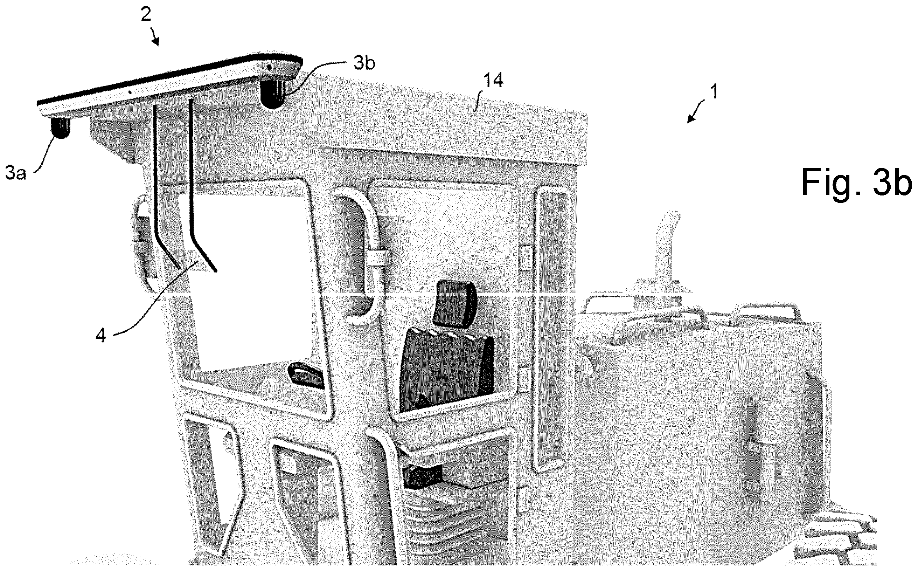

**Figures 3a** **and** **3b** show a motor grader as an example of a construction machine 1, the grader comprising an exemplary embodiment of system for configuring a machine control unit of the construction machine. This system comprises a construction site measuring system with perception sensors which may be included in performing earth-moving operations thus enabling a drastic expansion of the automation used. The disclosed method and system provide an extension to existing 2D systems on construction machines, such as crawlers and motor graders. This is based on the addition of perception sensors that add environmental context that existing 2D systems lack.

As shown in **Figure 3a****,** the construction machine 1 comprises a tool (blade 11) for performing earthmoving works. Although the shown machine is a motor grader, it could as well be any other construction machine usable in earthmoving works, such as an excavator or a dozer. A measuring unit 2 is mounted on a cab 14 of the grader 1 as part of the construction site measuring system.

As shown in more detail in **Figure 3b****,** the measuring unit 2 comprises one or more reality-capture devices (RCD) 3a, 3b to capture three-dimensional (3D) measuring data of a surrounding (usually uneven) terrain. The 3D measuring data - for instance being or comprising a 3D point cloud - is captured in at least one capturing direction. Preferably, this includes a direction towards the front of the construction machine and usually at least partially matches the viewing direction of the operator while operating the machine.

In the context of the present invention, an RCD in particular comprises some sensor arrangement to capture a 3D point cloud of the environment using a non-contact method. Typically, this includes determining distances to points in the environment using time-of-flight (ToF) measurements based on light waves (e.g. in the infrared spectrum), radio waves, or ultrasonic sound waves. However, stereoscopic vision sensors can provide point-cloud measurements of the environment using disparity, or the difference in position of data in the left and right images. For instance, each RCD may comprise at least two cameras and optionally other sensors, such as a laser scanner or an arrangement of ToF cameras. Reality-capture devices 3a,b of one or more measuring units 2 may be configured to contribute to generating the same 3D point cloud of the terrain, to detect obstacles and/or to track persons or animals entering a danger zone around the machine. Measuring units 2 may be provided on many parts of the construction machine, for instance connected to the tool 11, on the chassis 12 and/or on the cab 14.

The system for configuring the machine control unit comprises a computing unit and a user interface. Preferably, the user interface may be provided at or inside the cab 14 so that it may be used by an operator of the excavator 1 during operation. The user interface comprises a display for displaying live images and/or a graphical user interface (GUI). In the exemplary embodiment shown in **Figure 3b****,** the user interface comprises a semi-transparent display 4 that is provided in front of the cab 14, allowing the operator to view the displayed content without having to avert his eyes from the terrain ahead.

The user interface comprises input devices that preferably are provided inside the cab 14 - e.g. comprising a touch-sensitive display (touchscreen) and optionally a stylus for use with the touchscreen. The computing unit can use the measuring data generated by the measuring unit (RCD data) - e.g. LiDAR data from a LiDAR scanner and image data from a multitude of cameras - for generating a 3D model, e.g. of the construction site or parts thereof, and optionally also for obstacle detection.

The construction site measuring system additionally may comprise at least one of the following components, which optionally may be provided in a common housing together with the measuring unit 2 or in a common housing together with the computing unit and/or the user interface:
- a GNSS-antenna configured for generating position data,
- an Inertial Measurement Unit (IMU) configured for generating IMU data, and
- a cellular unit configured for transmitting any data to a remote station or other vehicles, e.g. construction machines or haul trucks on the same construction site.

For instance, if the measuring data comprises LiDAR data and image data, the image data can be used for colouring the LiDAR data and/or for optimizing a referencing of the LiDAR data by matching them with an image-based generated point cloud (e.g. generated by a visual simultaneous localization and mapping (VSLAM) algorithm). Also a feature tracking and/or feature recognition algorithm can help combining the LiDAR data to a consistent and well-referenced global point cloud. Similarly, the position data gained with the GNSS-antenna and the IMU data from the IMU can be used for a sensor fusion to obtain a higher precision when building a 3D model of the terrain. A VSLAM point cloud generation can also be supported on LiDAR data, in particular in such a way that the LiDAR data introduce scale and thereby increase stability of the algorithm. The LiDAR scanners may be configured for generating the LiDAR data while the two rotation axes of each scanner rotate faster than 0.1 Hz, particularly faster than 1 Hz, with a point acquisition rate of at least 300,000 points per second, particularly at least 500,000 points per second.

LiDAR scanners - as well as ToF cameras - may be capable to capture a 3D representation of the surrounding at a very fast pace. Therefore, with a moving construction machine it is possible to generate a coherent 3D point cloud based on a SLAM (Simultaneous Localization and Mapping) algorithm that uses the LiDAR data or the ToF data - either alone or in combination with image data from the cameras. Such localization and mapping is specifically advantageous if the construction machine is operating under a bridge or some other place shadowed from GNSS signals. The SLAM algorithm may be supported by at least one IMU providing IMU data that may be processed to stabilize the algorithm. In particular, all such fused sensor data can be processed by a Kalman filter.

The system for configuring the machine control unit also comprises at least one context camera, e.g. as a part of the construction site measuring system. Said context camera is any camera device that generates an image that provides context of the environment. In particular, the context camera need not provide any data for use in a sensor system. However, images provided by a stereoscopic camera are suitable for use as a context camera in addition to their use as a sensor through the calculation of a disparity map. The context camera may be provided in a common housing together with the RCD 3a,b of the measuring unit 2, at the semi-transparent display 4 or in a common housing together with the computing unit and the user interface. The context image data may be related to the RCD data of the construction site measuring system through the use of extrinsic parameters, which characterize the relative position of the context camera and RCDs as they are mounted on the construction machine 1. Images taken by the context camera are displayable to the operator of the machine on the semi-transparent display 4, on a touchscreen and/or on any other display of the user interface, particularly as a live video.

The use of one or more RCDs 3a,b mounted to the construction machine enables the entire work plan to be localized to the site based on the RCD data. If the RCDs are used for navigation or mapping (e.g. some variant of SLAM), then a design file can be localized to that navigation frame. If the machine is outfitted with GNSS or another global localization system, then the RCD data can be localized to global coordinates and the design file can be localized to the world frame as well. The design file can then be saved and output for reference or later use.

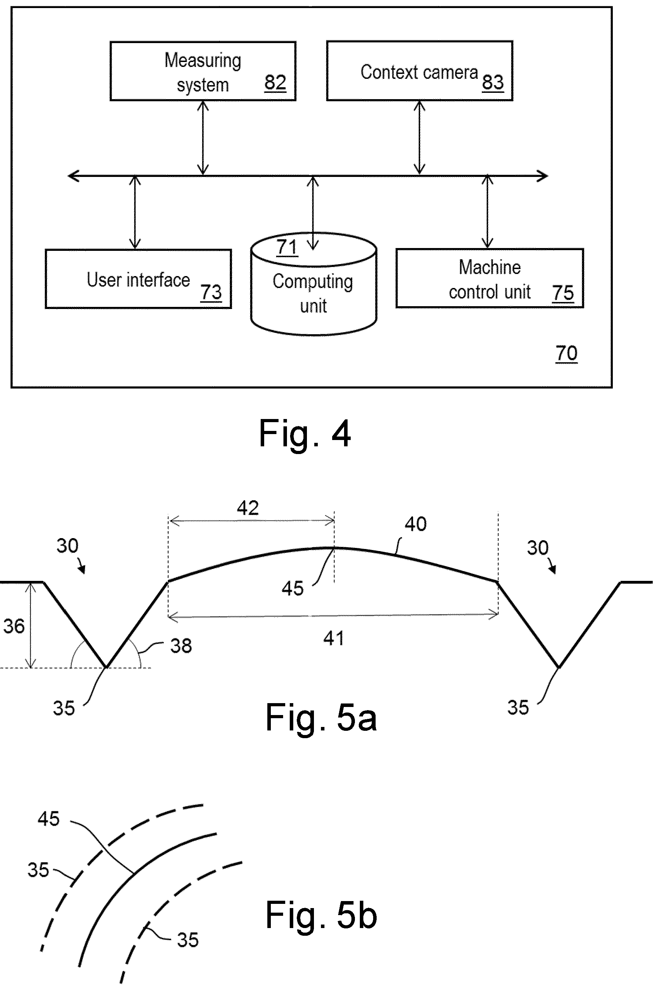

**Figure 4** illustrates an exemplary embodiment of a system 70 according to the invention. It may be provided at least partially on a construction machine, e.g. on the motor grader of **Figures 3a** **and** **3b****.** The system 70 comprises a computing unit 71 that is operatively coupled with a user interface 73. The user interface is configured to present information to an operator of the system and to receive input from the operator. For instance, the user interface 73 may be provided in the cab of the excavator of the motor grader of **Figures 3a** **and** **3b** and comprise a semi-transparent screen and/or a touchscreen.

The system may further comprise a machine control unit 75 operatively coupled with the computing unit 71. The machine control unit 75 is configured to aid the operator in performing earth-moving operations. In particular, this includes at least partially automatically supervising coordinates of a tool of the construction machine, for instance so that the blade of the motor grader of **Figures 3a** **and** **3b** is prevented from digging below a pre-defined plane. Alternatively, the machine control unit 75 may be provided separately on the construction machine and be connectable to the system 70 so that it is operatively coupled with the computing unit 71.

The system 70 may also comprise one or more reality capture devices (RCD) 82 and at least one context camera 83 that are operatively coupled with the computing unit 71. An image of the context camera 83 is displayable on a screen, e.g. a touchscreen, of the user interface 73. Alternatively, the RCD 82 and context camera 83 may be provided separately on the construction machine and be connectable to the system 70 so that they are operatively coupled with the computing unit 71.

The computing unit 71 is configured to receive, from the RCD 82, point cloud data of a surface of a construction site, particularly of a surface of the surrounding of the construction machine. The computing unit 71 is configured to receive, from the user interface 73, user input regarding a planned earth-moving operation on the construction site. The computing unit 71 determines 3D coordinates of the planned earth-moving operation and programmes the machine control unit 75 accordingly.

**Figures 5a** shows a final road design in a cross section comprising ditches 30 on both sides of the road crown 40. The road and/or the ditches may be constructed using an embodiment of the system according to the invention. For instance, the road design comprises values for a width 41 and/or half width 42 of a road crown 40. Regarding the ditches 30, values for a ditch depth 36, ditch wall angles 38 and a ditch offset 37 are provided, the ditch offset e.g. describing a distance between the ditch bottom edge 35 and either a road centre 45 or a road edge.

In order to construct a road with this cross section using the described system, it is necessary for the system to provide for spline offsetting. This allows the operator to use the inner edge of the ditch 30 to define the working direction of the road and then offset the shoulder edge and crown 40 of the road laterally in order to ensure they are parallel to the ditch line. The system should also be capable of generating and following curved splines for steering. This is illustrated in **Figure 5b****,** where calculated splines of the ditch edges 35 follow the given spline of the road centre 45. Alternatively, a spline of a first ditch edge 35 and of the road may be given, and a spline for a second ditch edge 35 that is to be constructed on the other side of the road is calculated. For instance, the spline is calculated with an offset so that both ditch edges 35 have the same distance to the road (e.g. to the respective side or to the centre 45 of the road).

A similar methodology can be used when slot grading with a crawler (as shown in **Figure 1b**). The operator performs an initial marking cut and then configures the system to maintain the desired slope and navigate along the desired trench. The operator is then only responsible for managing vehicle load and shifting it from forward to reverse and vice versa until a windrow spreading operation is necessary. In a slot grading approach the operator sets a marking line and then uses the system to generate a windrow to either side of the crawler in order to develop a trench. The system then steers between the two windrows.

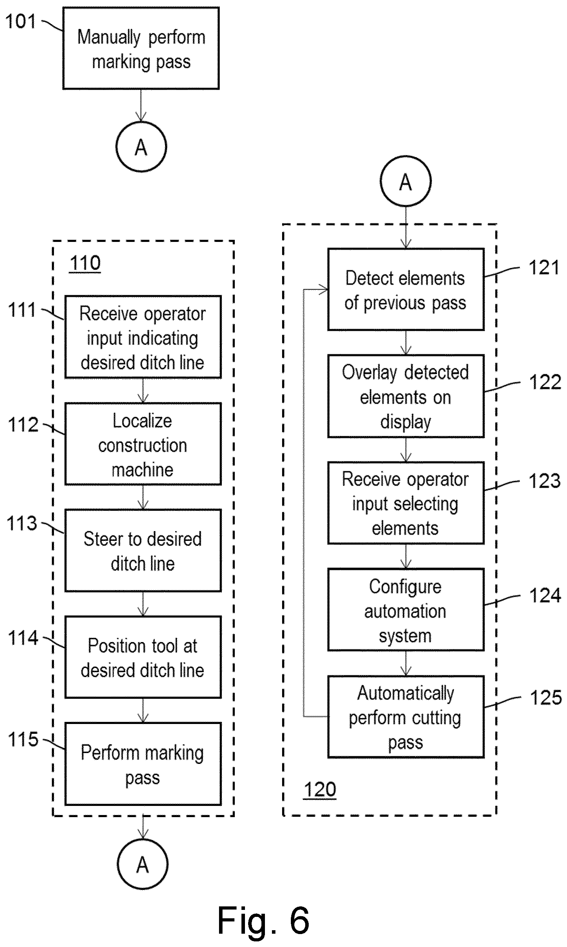

**Figure 6** is a flow-chart illustrating an exemplary embodiment of a method 100 according to the invention, i.e. a method for configuring a machine control unit of a construction machine for performing an earth-moving operation which comprises a multitude of phases that are to be performed consecutively. In the example described here, the earth-moving operation is a V-ditching operation (e.g. as described with respect to **Figure 2**), and the phases are passes of a motor grader or similar machine along a ditch line, the passes including several cutting passes. The operator is assisted by an exemplary embodiment of a system according to the invention in performing one or more of these passes.

Aside from V-ditching, other embodiments of the method and system are can also be used for other applications that comprise iterative passes over the same route to construct a structure, such as road building or slot grading. Aside from motor graders, the disclosed method and workflow can be used with other construction machines, such as crawlers and wheel loaders.

During performing the method, a three-dimensional point cloud of a 3D surface is captured, for instance using one or more reality-capture devices (RCD) mounted on a construction machine to capture the surface surrounding the machine. This allows localizing the construction machine as well as recognizing features in the surrounding. In particular, the 3D point cloud may be captured continuously. A context camera having a known position relative to the 3D point cloud and/or to a measuring system capturing the 3D point cloud captures context image data of the surrounding of the machine.

The illustrated method starts with performing a marking or registration pass, where the soil is cut just enough to provide a registration line to aid steering on subsequent passes. The operator can either perform 101 the marking pass manually, or start an assistance procedure 110 to be assisted by the machine control unit of the construction machine and/or a system according to the invention.

In the latter case, i.e. during the assistance procedure 110, the operator indicates a desired line for the marking pass ("ditch line"), for instance a straight line or a spline. This indication may comprise an input of coordinates or a line drawn in a context image displayed on a touchscreen. Also, the operator may select a feature in the context image, e.g. a road or similar structure, and indicate an offset for the desired line from the feature. Alternatively or additionally, a data file comprising the coordinates can be uploaded to the system.

This indication of the desired ditch line is received 111 as input by the system. Since the RCDs mounted to the construction machine enable localization 112 of the construction machine, optionally the automation system can be set to steer 113 to the desired ditch line and/or set to position 114 the tool, e.g. a toe of a mould board, at the designated ditch line and maintain this position, e.g. at least a height and inclination, while the construction machine follows the ditch line - either steered by the operator, or controlled by the automation system. The marking pass is thus performed 115 fully or partly automatically. In the latter case, for instance, the automation system actuates blade side shift in order to keep the tool, e.g. the toe of the mould board, at the desired position while the operator controls the steering, circle shift and circle angles.

After the marking pass has been made (manually 101 or using the assistance procedure 110), a following pass can begin, e.g. as shown here a cutting procedure 120 that includes making a first deep cut. Using the RCDs mounted to the construction machine, the construction site measuring system can automatically detect 121 edges and surfaces of the previous pass, i.e. of the marking pass or a previous cutting pass. These edges and surfaces may be detected 121, e.g., in image data and/or point cloud data captured by the RCDs.

The system then presents these detected elements in a display, by overlaying 122 them in a context image displayed on a touchscreen, and allows the operator to select previously shaped edges and/or surfaces in order to configure the automation systems for a present cutting pass. For instance, the operator can select the edge of the previous cut and configure the system to cut 25 mm below it for the next pass. The operator can select the previous surface and configure the system to maintain a parallel cut for the following pass. The cut might also be intended to change the cross slope of the surface but use the previously sloped edge as a vertex of the plane being shaped on the subsequent cutting pass. These selections are received 123 as operator input on the user interface, e.g. on a touchscreen showing a context image, to configure 124 the automation system for fully or partly automatically performing 125 the cutting pass. This cutting procedure 120 can be repeated until the last pass has been made and the construction of the ditch is completed.

Optionally, if a user interface displays a context image on a touchscreen that is also used for receiving the operator input (e.g. in steps 111 and 123), the input may include a selection of pixels of the context image or be interpreted as such a selection of pixels. Since the context camera capturing the context image data has a known position relative to the measuring system and/or the 3D measuring data, the selection of pixels (e.g. representing a desired ditch line) can be mapped to the 3D measuring data, e.g. to a surface of a 3D terrain model that is generated based on the 3D measuring data. Based on the mapping, it is then possible to determine 3D coordinates on the surface that can be provided to the machine control unit for at least partially controlling the earth-moving operation. This is described in detail in the earth-moving operation. This is described in detail in the European patent application No. 22180149.1.

The data captured by the RCDs can also be used to monitor the shed material as it forms a windrow. The volume of material in the windrow or the height of the windrow can be used to indicate to the operator when it is necessary to perform a spreading pass (see e.g. steps 7 and 8 in **Figure 2**). Alternatively or additionally, the control unit may be triggered to perform a spreading behaviour during the next pass or to automatically perform a spreading pass.

Optionally, the method may include storing information regarding previously identified lines and surfaces in a memory and retrieving this information in a subsequent pass. For instance, the method may comprise passes for cleaning a bottom of a ditch (see e.g. steps 9 and 10 in **Figure 2**). In this case it would help the operator if the system remembers the location of the bottom edge of the ditch even when it is covered in soil. This would allow the operator to cut the inside slope of the ditch and then use the inner edge of the ditch when cutting the outer slope of the ditch and then again when clearing the soil out of the bottom of the ditch. It would be difficult to correctly define the offset using the upper edge of the ditch, but since the system knows where the bottom edge is relative to the upper edge, the operator can order it to steer to the hidden ditch line while clearing soil from the ditch, which is especially helpful if the ditch line is a spline.

In some embodiments, the system may be configured to self-configure. In this mode, the operator may set the cross-slope and height for the marking pass, incrementing the height until the correct depth is reached for a marking pass. The localization capability of the RCDs enables a globally consistent height to be maintained as the vehicle navigates the site. The operator can then use an increment button to tell the system the desired depth of each cutting pass. The construction site measuring system can use its localization capabilities to determine when it was at the beginning position of the job. It can then combine the localization data with the configuration for the previous cutting pass in order to automatically detect and identify the edges and surfaces cut by the machine. It can then automatically set the desired steering spline or mould-board toe line based on the previous pass and operator indicated depth.

According to some embodiments, a method and system according to the invention can also be used to monitor the construction of a V-ditch. Since the system knows the workflow, it can be used to track the steps used in the construction as well as the system configuration and work product for each pass. This data provides a real-time status for the construction job and can also be used to train new operators, using the system to designate the desired workflow for inexperienced operators.

Optionally, the system may include a mechanism for sensing a load of the construction machine. This may include sensing engine torque, watching engine speed changes, hydrostatic loop pressures and or displacements, transmission output torque, torque converter torque, etc. In this case, a depth control of the control unit may be set to a load dependent state where the system can automatically adjust a height of the tool based on the detected load.

Although the invention is illustrated above, partly with reference to some preferred embodiments, it must be understood that numerous modifications and combinations of different features of the embodiments can be made.

## Claims

1. System (70) for configuring a machine control unit (75) of a construction machine (1) for performing an earth-moving operation, the earth-moving operation comprising a multitude of phases that are to be performed consecutively, the system (70) comprising
- a measuring system (82) configured for capturing three-dimensional measuring data of a terrain in a surrounding of the construction machine (1) in at least a first detection range;
- a user interface (73) configured for receiving (140) user input from the operator of the construction machine (1); and
- a computing unit (71) operatively coupled at least with the measuring system (82), the user interface (73) and the machine control unit (75), wherein the computing unit (71) is configured for detecting (121) elements of a previous phase of the earth-moving operation based on the three-dimensional measuring data, the system (70) further comprising a context camera (83) having a known position relative to the measuring system (82) and/or the three-dimensional measuring data and being configured for capturing context image data of the terrain within the first detection range, **characterised in that** the user interface (73) is configured for
- displaying at least one context image based on the context image data to an operator of the construction machine (1); and **in that** the computing unit (71) is configured for
- overlaying (122) the detected elements on the displayed context image;
- receiving (123) input from the operator related to a next phase of the earth-moving operation; and
- configuring (124), based at least on the detected elements and on the input from the operator, the machine control unit (75) to at least partially perform (125) the next phase of the earth-moving operation automatically.

2. System (70) according to claim 1, wherein the measuring system (82) comprises at least one measuring unit (2) at the construction machine (1), each measuring unit (2) being configured for capturing 3D point cloud data, wherein each measuring unit (2) comprises:
- at least one laser scanner,
- a plurality of ToF cameras,
- a millimetre wave radar system, and/or
- one or more stereo camera systems.

3. System (70) according to claim 1 or claim 2, wherein
- the user interface (73) comprises a touch-sensitive display on which the context image is displayed and on which the user input is received; and/or
- the input from the operator comprises a selection of one or more of the detected elements.

4. System (70) according to any one of the preceding claims, wherein the construction machine (1) is a motor grader and the earth-moving operation comprises construction a ditch (30), wherein
- the phases are passes of the motor grader along a ditch line, including a plurality of cutting passes; and
- the detected elements comprise an edge (35, 39) and/or surface produced by a previous cutting pass,
particularly wherein the earth-moving operation comprises V-ditching, and/or the input from the operator comprises
- selecting an edge and/or surface produced by a previous cutting pass;
- selecting a cutting depth for the next pass;
- selecting to maintain a parallel cut for the next pass; and/or
- selecting an edge and a surface produced by a previous cutting pass and selecting to adjust a cross slope of the surface for the next pass while maintaining the selected edge as a vertex of a plane to be shaped during the next pass.

5. System (70) according to any one of the preceding claims, wherein the computing unit (71) is configured for
- receiving (111) operator input indicating a desired line, along which line the earth moving operation is desired to be performed,
- localizing (112) the construction machine based on the three-dimensional measuring data,
- positioning (114) the tool (11) at the desired line, and
- performing (115) a first phase of the multitude of phases, thereby producing detectable elements,
particularly wherein
- the construction machine is localized (112) relative to the desired line;
- the computing unit (71) is configured for steering the construction machine (113) to the desired line; and/or
- the desired line is a spline.

6. System (70) according to claim 5, wherein operator input comprises an offset (37) of the desired line from a given line and the computing unit (71) is configured to calculate the desired line based on the offset (37), particularly wherein the given line is a spline and the computing unit (71) is configured to calculate a spline as the desired line based on the offset (37).

7. System (70) according to any one of the preceding claims, wherein
- the measuring system (82) is configured for continuously capturing the three-dimensional measuring data and for continuously providing the captured three-dimensional measuring data to the computing unit; and
- the computing unit (71) is configured for continuously evaluating the three-dimensional measuring data for detecting (121) the elements and for continuously configuring (124) the machine control unit (75) while at least partially automatically performing (125) a phase of the earth-moving operation.

8. Construction machine (1), in particular a grader, a dozer or an excavator, the construction machine comprising
- a tool (11) for performing an earth-moving operation, in particular for digging a ditch or trench;
- a control unit (75) for at least partially controlling the earth-moving operation; and
- a system (70) according to any one of the preceding claims, the system being operatively coupled with the control unit (75) or comprising the control unit (75).

9. Computer-implemented method (100) for configuring a machine control unit (75) of a construction machine (1) for performing an earth-moving operation, the earth-moving operation comprising a multitude of phases that are to be performed consecutively, the method (100) comprising, by a computing unit (71),
- receiving three-dimensional measuring data of a terrain in a surrounding of the construction machine (1) in at least a first detection range;
- detecting (121) elements of a previous phase of the earth-moving operation based on the three-dimensional measuring data; and
- configuring (124), based at least on the detected elements, the machine control unit (75) to at least partially perform (125) the next phase of the earth-moving operation automatically,
**characterized by**
- capturing context image data of the terrain within the first detection range using a context camera (83) having a known position relative to the three-dimensional measuring data and/or to a measuring system (82) capturing the three-dimensional measuring data;
- displaying at least one context image based on the context image data to an operator of the construction machine (1), overlaying (122) the detected elements on the displayed context image; and
- receiving (123) input from the operator related to a next phase of the earth-moving operation, particularly wherein the input from the operator comprises a selection of one or more of the detected elements,
wherein configuring (124) the machine control unit (75) is also based on the input from the operator.

10. Method (100) according to claim 9, wherein the construction machine (1) is a motor grader and the earth-moving operation comprises constructing a ditch (30), wherein
- the phases are passes of the motor grader along a ditch line, including a plurality of cutting passes; and
- the detected elements comprise an edge (35, 39) and/or surface produced by a previous cutting pass.

11. Method (100) according to claim 10, wherein
- the earth-moving operation comprises V-ditching;
- the input from the operator comprises selecting an edge and/or surface produced by a previous cutting pass;
- the input from the operator comprises selecting to maintain a parallel cut for the next pass; and/or
- the input from the operator comprises selecting a cutting depth for the next pass.

12. Method (100) according to any one of claims 9 to 11, comprising
- receiving (111) operator input indicating a desired line, along which line the earth moving operation is desired to be performed,
- localizing (112) the construction machine based on the three-dimensional measuring data, particularly relative to the desired line,
- positioning (114) the tool (11) at the desired line, and
- performing (115) a first phase of the multitude of phases, thereby producing detectable elements,
particularly wherein
- the method comprises automatically steering the construction machine (113) to the desired line;
- the desired line is a spline; and/or
- the operator input comprises an offset (37) of the desired line from a given line and the method comprises calculating the desired line based on the offset (37).

13. Method (100) according to any one of claims 9 to 12, wherein
- the three-dimensional measuring data is captured continuously and evaluated continuously for detecting (121) the elements, and
- the machine control unit (75) is configured (124) continuously while at least partially automatically performing (125) a phase of the earth-moving operation.

14. Method (100) according to any one of claims 9 to 13, wherein
- the earth-moving operation comprises constructing a ditch (30),
- the desired line is a ditch line, particularly a ditch edge line,
- the first phase is a marking pass along the ditch line, and
- the produced elements produced by the marking pass comprise an edge (35, 39) and/or surface,
particularly wherein
- the construction machine (1) is a motor grader;
- the earth-moving operation comprises V-ditching; and/or
- the ditch line is a ditch edge line, a ditch spline or a ditch edge spline.

15. Computer programme product comprising programme code which is stored on a machine-readable medium, or being embodied by an electromagnetic wave comprising a programme code segment, and having computer-executable instructions for performing, particularly when executed on a computing unit (71) of a system (70) according to any one of claims 1 to 7, the method (100) according to any one of claims 9 to 14.

## Patentansprüche

1. System (70) zum Konfigurieren einer Maschinensteuerungseinheit (75) einer Baumaschine (1) zum Durchführen eines Erdbewegungsvorgangs, wobei der Erdbewegungsvorgang eine Menge Phasen umfasst, die nacheinander durchgeführt werden sollen, wobei das System (70) umfasst
- ein Messsystem (82), das zum Erfassen von dreidimensionalen Messdaten eines Geländes in einer Umgebung der Baumaschine (1) in zumindest einem ersten Erkennungsbereich konfiguriert ist;
- eine Benutzerschnittstelle (73), die zum Empfangen (140) einer Benutzereingabe von dem Bediener der Baumaschine (1) konfiguriert ist; und
- eine Recheneinheit (71), die betriebsmäßig zumindest mit dem Messsystem (82), der Benutzerschnittstelle (73) und der Maschinensteuerungseinheit (75) gekoppelt ist, wobei die Recheneinheit (71) konfiguriert ist zum
Erkennen(121) von Elementen einer vorherigen Phase des Erdbewegungsvorgangs auf der Grundlage der dreidimensionalen Messdaten,
wobei das System ferner eine Kontext-Kamera (83) umfasst, die eine bezogen auf das Messsystem (82) und/oder die dreidimensionalen Messdaten bekannte Position aufweist und zum Erfassen von Kontextbilddaten des Geländes innerhalb des ersten Erkennungsbereiches konfiguriert ist, **dadurch gekennzeichnet, dass** die Benutzerschnittstelle (73) konfiguriert ist zum
- Anzeigen von zumindest einem Kontextbild auf der Grundlage der Kontextbilddaten an einen Bediener der Baumaschine (1); und dass die Recheneinheit (71) konfiguriert ist zum
- Überlagern (122) der erkannten Elemente auf dem angezeigten Kontextbild;
- Empfangen (123) einer Eingabe von dem Bediener, die im Zusammenhang mit einer nächsten Phase des Erdbewegungsvorgangs steht; und
- Konfigurieren (124), auf der Grundlage zumindest der erkannten Elementen und der Eingabe von dem Bediener, der Maschinensteuerungseinheit (75), um die nächste Phase des Erdbewegungsvorgangs zumindest teilweise automatisch durchzuführen (125).

2. System (70) nach Anspruch 1, wobei das Messsystem (82) zumindest eine Messeinheit (2) an der Baumaschine (1) umfasst, wobei jede Messeinheit (2) zum Erfassen von 3D-Punktwolkendaten konfiguriert ist, wobei jede Messeinheit (2) umfasst:
- zumindest einen Laserscanner,
- eine Vielzahl von ToF-Kameras,
- ein Millimeter-Wellenradarsystem und/oder
- ein oder mehrere Stereokamerasysteme.

3. System (70) nach Anspruch 1 oder Anspruch 2, wobei
- die Benutzerschnittstelle (73) eine berührungsempfindliche Anzeige umfasst, auf der das Kontextbild angezeigt wird und auf der die Benutzereingabe empfangen wird; und/oder
- die Eingabe von dem Bediener eine Auswahl von einem oder mehreren der erkannten Elemente umfasst.

4. System (70) nach einem der vorhergehenden Ansprüche, wobei die Baumaschine (1) eine Bodenhobelmaschine ist und der Erdbewegungsvorgang den Bau eines Straßengrabens (30) umfasst, wobei
- die Phasen Durchläufe der Bodenhobelmaschine entlang einer Straßengrabenlinie sind, die eine Vielzahl von Schnittdurchläufen beinhalten; und
- die erkannten Elemente eine Kante (35, 39) und/oder eine Oberfläche beinhalten, die durch einen vorherigen Schnittdurchlauf erzeugt wurde,
insbesondere wobei der Erdbewegungsvorgang das Ziehen eines V-Straßengrabens umfasst und/oder die Eingabe von dem Bediener umfasst
- Auswählen einer Kante und/oder einer Oberfläche, die durch einen vorherigen Schnittdurchlauf erzeugt wurde;
- Auswählen einer Schnitttiefe für den nächsten Durchlauf;
- Auswählen, dass ein paralleler Schnitt für den nächsten Durchlauf aufrechterhalten wird; und/oder
- Auswählen einer Kante und einer Oberfläche, die durch einen vorherigen Schnittdurchlauf erzeugt wurde, und Auswählen, dass eine Querneigung der Oberfläche für den nächsten Durchlauf justiert wird, während die ausgewählte Kante als ein Scheitel einer Ebene aufrechterhalten wird, die während des nächsten Durchlaufes geformt werden soll.

5. System (70) nach einem der vorhergehenden Ansprüche, wobei die Recheneinheit (71) konfiguriert ist zum
- Empfangen(111) einer Bedienereingabe, die eine gewünschte Linie angibt, entlang welcher Linie gewünscht wird, dass der Erdbewegungsvorgang durchgeführt werden soll,
- Orten (112) der Baumaschine auf der Grundlage der dreidimensionalen Messdaten,
- Positionieren (114) des Werkzeugs (11) an der gewünschten Linie und
- Durchführen (115) einer ersten Phase der Menge Phasen, wodurch erkennbare Elemente erzeugt werden,
insbesondere wobei
- die Baumaschine bezogen auf die gewünschte Linie geortet (112) wird;
- die Recheneinheit (71) zum Lenken der Baumaschine (113) zu der gewünschten Linie konfiguriert ist; und/oder
- die gewünschte Linie eine Spline ist.

6. System (70) nach Anspruch 5, wobei die Bedienereingabe einen Versatz (37) der gewünschten Linie von einer bestimmten Linie umfasst und die Recheneinheit (71) konfiguriert ist, um die gewünschte Linie auf der Grundlage des Versatzes (37) zu berechnen, insbesondere wobei die bestimmte Linie eine Spline ist und die Recheneinheit (71) konfiguriert ist, um eine Spline aus die gewünschte Linie auf der Grundlage des Versatzes (37) zu berechnen.

7. System (70) nach einem der vorhergehenden Ansprüche, wobei
- das Messsystem (82) zum kontinuierlichen Erfassen der dreidimensionalen Messdaten und zum kontinuierlichen Bereitstellen der erfassten dreidimensionalen Messdaten für die Recheneinheit konfiguriert ist; und
- die Recheneinheit (71) zum kontinuierlichen Auswerten der dreidimensionalen Messdaten zum Erkennen (121) der Elemente zum kontinuierlichen Konfigurieren (124) der Maschinensteuerungseinheit (75) während des zumindest teilweise automatischen Durchführens (125) einer Phase der Erdbewegungsvorgangs konfiguriert ist.

8. Baumaschine (1), insbesondere ein Erdhobel, eine Planierraupe oder ein Bagger, wobei die Baumaschine umfasst
- ein Werkzeug (11) zum Durchführen eines Erdbewegungsvorgangs, insbesondere zum Ausheben eines Straßengrabens oder eines Grabens;
- eine Steuerungseinheit (75) zum zumindest teilweise Steuern des Erdbewegungsvorgangs; und
- ein System (70) nach einem der vorhergehenden Ansprüche, wobei das System betriebsmäßig mit der Steuerungseinheit (75) gekoppelt ist oder die Steuerungseinheit (75) umfasst.

9. Computerimplementiertes Verfahren (100) zum Konfigurieren einer Maschinensteuerungseinheit (75) einer Baumaschine (1) zum Durchführen eines Erdbewegungsvorgangs, wobei der Erdbewegungsvorgang eine Menge Phasen umfasst, die nacheinander durchgeführt werden sollen, wobei das Verfahren (100) durch eine Recheneinheit (71) umfasst
- Empfangen von dreidimensionalen Messdaten eines Geländes in einer Umgebung der Baumaschine (1) in zumindest einem ersten Erkennungsbereich;
- Erkennen (121) von Elementen einer vorherigen Phase des Erdbewegungsvorgangs auf der Grundlage der dreidimensionalen Messdaten; und
- Konfigurieren (124), auf der Grundlage zumindest der erkannten Elemente, der Maschinensteuerungseinheit (75), um die nächste Phase des Erdbewegungsvorgangs zumindest teilweise automatisch durchzuführen (125),
**gekennzeichnet durch**
- Erfassen von Kontextbilddaten des Geländes innerhalb des ersten Erkennungsbereichs unter Verwendung einer Kontextkamera (83), die eine bekannte Position bezogen auf die dreidimensionalen Messdaten und/oder auf ein Messsystem (82), das die dreidimensionalen Messdaten erfasst, aufweist;
- Anzeigen von mindestens einem Kontextbild auf der Grundlage der Kontextbilddaten an einen Bediener der Baumaschine (1), Überlagern (122) der erkannten Elemente auf dem angezeigten Kontextbild; und
- Empfangen (123) einer Eingabe von dem Bediener, die im Zusammenhang mit einer nächste Phase des Erdbewegungsvorgangs steht, insbesondere wobei die Eingabe von dem Bediener eine Auswahl von einem oder mehreren der erkannten Elemente umfasst,
wobei das Konfigurieren (124) der Maschinensteuerungseinheit (75) auch auf der Grundlage der Eingabe von dem Bediener erfolgt.

10. Verfahren (100) nach Anspruch 9, wobei die Baumaschine (1) eine Bodenhobelmaschine ist und der Erdbewegungsvorgang das Bauen eines Straßengrabens (30) umfasst, wobei
- die Phasen Durchläufe der Bodenhobelmaschine entlang einer Straßengrabenlinie sind, die eine Vielzahl von Schnittdurchläufen beinhalten; und
- die erkannten Elemente eine Kante (35, 39) und/oder eine Oberfläche beinhalten, die durch einen vorherigen Schnittdurchlauf erzeugt wurde.

11. Verfahren (100) nach Anspruch 10, wobei
- der Erdbewegungsvorgang das Ziehen eines V-Straßengrabens umfasst;
- die Eingabe von dem Bediener das Auswählen einer Kante und/oder einer Oberfläche umfasst, die durch einen vorherigen Schnittdurchlauf erzeugt wurde;
- die Eingabe von dem Bediener das Auswählen umfasst, dass ein paralleler Schnitt für den nächsten Durchlauf aufrechterhalten werden soll; und/oder
- die Eingabe von dem Bediener das Auswählen einer Schnitttiefe für den nächsten Durchlauf umfasst.

12. Verfahren (100) nach einem der Ansprüche 9 bis 11 , umfassend
- Empfangen (111) einer Bedienereingabe, die eine gewünschte Linie angibt, entlang welcher Linie gewünscht wird, dass der Erdbewegungsvorgang durchgeführt werden soll,
- Orten (112) der Baumaschine auf der Grundlage der dreidimensionalen Messdaten, insbesondere bezogen auf die gewünschte Linie,
- Positionieren (114) des Werkzeugs (11) an der gewünschten Linie und
- Durchführen (115) einer ersten Phase der Menge Phasen, wodurch erkennbare Elemente erzeugt werden,
insbesondere wobei
- das Verfahren das automatische Lenken der Baumaschine (113) zu der gewünschten Linie umfasst;
- die gewünschte Linie eine Spline ist; und/oder
- die Bedienereingabe einen Versatz (37) der gewünschten Linie von einer bestimmten Linie umfasst und das Verfahren das Berechnen der gewünschten Linie auf der Grundlage des Versatzes (37) umfasst.

13. Verfahren (100) nach einem der Ansprüche 9 bis 12, wobei
- die dreidimensionalen Messdaten kontinuierlich erfasst werden und kontinuierlich zum Erkennen (121) der Elemente ausgewertet werden und
- die Maschinensteuerungseinheit (75) kontinuierlich konfiguriert (124) wird, während eine Phase des Erdbewegungsvorgangs zumindest teilweise automatisch durchgeführt (125) wird.

14. Verfahren (100) nach einem der Ansprüche 9 bis 13, wobei
- der Erdbewegungsvorgang das Bauen eines Straßengrabens (30) umfasst,
- die gewünschte Linie eine Straßengraben-Linie, insbesondere eine Straßengrabenkanten-Linie ist,
- die erste Phase ein Markierungsdurchlauf entlang der Straßengraben-Linie ist und
- die erzeugten Elemente, die durch den Markierungsdurchlauf erzeugt werden, eine Kante (35, 39) und/oder eine Oberfläche umfassen,
insbesondere wobei
- die Baumaschine (1) eine Bodenhobelmaschine ist;
- der Erdbewegungsvorgang das Ziehen eines V-Straßengrabens umfasst; und/oder
- die Straßengraben-Linie eine Straßengrabenkanten-Linie, eine Straßengraben-Spline oder eine Straßengrabenkanten-Spline ist.

15. Computerprogrammprodukt, umfassend Programmcode, der auf einem maschinenlesbaren Medium gespeichert ist oder von einer elektromagnetischen Welle gebildet wird, die ein Programmcodesegment umfasst, und computerausführbare Anweisungen zum Durchführen, insbesondere, wenn sie auf einer Recheneinheit (71) eines Systems (70) nach einem der Ansprüche 1 bis 7 ausgeführt werden, des Verfahrens (100) nach einem der Ansprüche 9 bis 14 aufweist.

## Revendications

1. Système (70) pour configurer une unité de commande de machine (75) d'une machine de construction (1) pour effectuer une opération de terrassement, l'opération de terrassement comprenant une multitude de phases qui doivent être effectuées consécutivement, le système (70) comprenant :
- un système de mesure (82) configuré pour capturer des données de mesure tridimensionnelles d'un terrain dans un environnement de la machine de construction (1) dans au moins une première plage de détection ;
- une interface utilisateur (73) configurée pour recevoir (140) une entrée utilisateur provenant de l'opérateur de la machine de construction (1) ; et
- une unité de calcul (71) couplée fonctionnellement au moins au système de mesure (82), à l'interface utilisateur (73) et à l'unité de commande de machine (75),
dans lequel l'unité de calcul (71) est configurée pour :
détecter (121) des éléments d'une phase précédente de l'opération de terrassement sur la base des données de mesure tridimensionnelles,
le système (70) comprenant en outre une caméra contextuelle (83) ayant une position connue par rapport au système de mesure (82) et/ou aux données de mesure tridimensionnelles et étant configurée pour capturer des données d'image contextuelle du terrain dans la première plage de détection,
**caractérisé en ce que** l'interface utilisateur (73) est configurée pour :
- afficher au moins une image contextuelle sur la base des données d'image contextuelle à un opérateur de la machine de construction (1) ;
et **en ce que** l'unité de calcul (71) est configurée pour :
- superposer (122) les éléments détectés sur l'image contextuelle affichée ;
- recevoir (123) une entrée de l'opérateur relative à une phase suivante de l'opération de terrassement ; et
- configurer (124), sur la base au moins des éléments détectés et de l'entrée de l'opérateur, l'unité de commande de machine (75) pour exécuter automatiquement au moins partiellement (125) la phase suivante de l'opération de terrassement.

2. Système (70) selon la revendication 1, dans lequel le système de mesure (82) comprend au moins une unité de mesure (2) sur la machine de construction (1), chaque unité de mesure (2) étant configurée pour capturer des données de nuage de points 3D, dans lequel chaque unité de mesure (2) comprend :
- au moins un scanner laser,
- une pluralité de caméras ToF,
- un système radar à ondes millimétriques et/ou
- un ou plusieurs systèmes de caméras stéréo.

3. Système (70) selon la revendication 1 ou la revendication 2, dans lequel
- l'interface utilisateur (73) comprend un écran tactile sur lequel l'image contextuelle est affichée et sur lequel l'entrée utilisateur est reçue ; et/ou
- l'entrée de l'opérateur comprend une sélection d'un ou plusieurs des éléments détectés.

4. Système (70) selon l'une quelconque des revendications précédentes, dans lequel la machine de construction (1) est une niveleuse et l'opération de terrassement comprend la construction d'un fossé (30), dans lequel
- les phases sont des passages de la niveleuse le long d'une ligne de fossé, incluant une pluralité de passages de coupe ; et
- les éléments détectés comprennent un bord (35, 39) et/ou une surface produits par un passage de coupe précédent,
en particulier dans lequel l'opération de terrassement comprend le creusement d'un fossé en V et/ou l'entrée de l'opérateur comprend :
- la sélection d'un bord et/ou d'une surface produits par un passage de coupe précédent ;
- la sélection d'une profondeur de coupe pour le passage suivant ;
- la sélection du maintien d'une coupe parallèle pour le passage suivant ; et/ou
- la sélection d'un bord et d'une surface produits par un passage de coupe précédent et la sélection d'un ajustement d'une pente transversale de la surface pour le passage suivant tout en conservant le bord sélectionné comme sommet d'un plan à façonner pendant le passage suivant.

5. Système (70) selon l'une quelconque des revendications précédentes, dans lequel l'unité de calcul (71) est configurée pour :
- recevoir (111) une entrée de l'opérateur indiquant une ligne souhaitée le long de laquelle l'opération de terrassement doit être effectuée,
- localiser (112) la machine de construction sur la base des données de mesure tridimensionnelles,
- positionner (114) l'outil (11) sur la ligne souhaitée et
- effectuer (115) une première phase de la multitude de phases, produisant ainsi des éléments détectables,
en particulier dans lequel
- la machine de construction est localisée (112) par rapport à la ligne souhaitée ;
- l'unité de calcul (71) est configurée pour conduire la machine de construction (113) vers la ligne souhaitée ; et/ou
- la ligne souhaitée est une spline.

6. Système (70) selon la revendication 5, dans lequel l'entrée de l'opérateur comprend un décalage (37) de la ligne souhaitée par rapport à une ligne donnée et l'unité de calcul (71) est configurée pour calculer la ligne souhaitée sur la base du décalage (37), en particulier dans lequel la ligne donnée est une spline et l'unité de calcul (71) est configurée pour calculer une spline en tant que ligne souhaitée sur la base du décalage (37).

7. Système (70) selon l'une quelconque des revendications précédentes, dans lequel
- le système de mesure (82) est configuré pour capturer en continu les données de mesure tridimensionnelles et pour fournir en continu les données de mesure tridimensionnelles capturées à l'unité de calcul ; et
- l'unité de calcul (71) est configurée pour évaluer en continu les données de mesure tridimensionnelles afin de détecter (121) les éléments et pour configurer en continu (124) l'unité de commande de machine (75) tout en exécutant automatiquement au moins partiellement (125) une phase de l'opération de terrassement.

8. Machine de construction (1), en particulier une niveleuse, un bulldozer ou une excavatrice, la machine de construction comprenant :
- un outil (11) pour effectuer une opération de terrassement, en particulier pour creuser un fossé ou une tranchée ;
- une unité de commande (75) pour commander au moins partiellement l'opération de terrassement ; et
- un système (70) selon l'une quelconque des revendications précédentes, le système étant couplé fonctionnellement à l'unité de commande (75) ou comprenant l'unité de commande (75).

9. Procédé mis en œuvre par ordinateur (100) pour configurer une unité de commande de machine (75) d'une machine de construction (1) pour effectuer une opération de terrassement, l'opération de terrassement comprenant une multitude de phases qui doivent être effectuées consécutivement, le procédé (100) comprenant, par une unité de calcul (71), les étapes consistant à :
- recevoir des données de mesure tridimensionnelles d'un terrain dans un environnement de la machine de construction (1) dans au moins une première plage de détection ;
- détecter (121) des éléments d'une phase précédente de l'opération de terrassement sur la base des données de mesure tridimensionnelles ; et
- configurer (124), sur la base au moins des éléments détectés, l'unité de commande de machine (75) pour exécuter automatiquement au moins partiellement (125) la phase suivante de l'opération de terrassement, **caractérisé par** les étapes consistant à :
- capturer de données d'image contextuelle du terrain dans la première plage de détection à l'aide d'une caméra contextuelle (83) ayant une position connue par rapport aux données de mesure tridimensionnelles et/ou à un système de mesure (82) capturant les données de mesure tridimensionnelles ;
- afficher au moins une image contextuelle sur la base des données d'image contextuelle à un opérateur de la machine de construction (1), en superposant (122) les éléments détectés sur l'image contextuelle affichée ; et
- recevoir (123) une entrée de l'opérateur relative à une phase suivante de l'opération de terrassement, en particulier dans lequel l'entrée de l'opérateur comprend une sélection d'un ou plusieurs des éléments détectés,
dans lequel la configuration (124) de l'unité de commande de machine (75) est également basée sur l'entrée de l'opérateur.

10. Procédé (100) selon la revendication 9, dans lequel la machine de construction (1) est une niveleuse et l'opération de terrassement comprend la construction d'un fossé (30), dans lequel
- les phases sont des passages de la niveleuse le long d'une ligne de fossé, incluant une pluralité de passages de coupe ; et
- les éléments détectés comprennent un bord (35, 39) et/ou une surface produits par un passage de coupe précédent,

11. Procédé (100) selon la revendication 10, dans lequel
- l'opération de terrassement comprend le creusement d'un fossé en V ;
- l'entrée de l'opérateur comprend la sélection d'un bord et/ou d'une surface produits par un passage de coupe précédent ;
- l'entrée de l'opérateur comprend la sélection du maintien d'une coupe parallèle pour le passage suivant ; et/ou
- l'entrée de l'opérateur comprend la sélection d'une profondeur de coupe pour le passage suivant.

12. Procédé (100) selon l'une quelconque des revendications 9 à 11, comprenant les étapes consistant à :
- recevoir (111) une entrée de l'opérateur indiquant une ligne souhaitée le long de laquelle l'opération de terrassement doit être effectuée,
- localiser (112) la machine de construction sur la base des données de mesure tridimensionnelles, en particulier relatives à la ligne souhaitée,
- positionner (114) l'outil (11) sur la ligne souhaitée, et
- effectuer (115) une première phase de la multitude de phases, produisant ainsi des éléments détectables,
en particulier dans lequel
- le procédé comprend l'étape consistant à conduire automatiquement la machine de construction (113) vers la ligne souhaitée ;
- la ligne souhaitée est une spline ; et/ou
- l'entrée de l'opérateur comprend un décalage (37) de la ligne souhaitée par rapport à une ligne donnée et le procédé comprend l'étape consistant à calculer la ligne souhaitée sur la base du décalage (37).

13. Procédé (100) selon l'une quelconque des revendications 9 à 12, dans lequel
- les données de mesure tridimensionnelles sont capturées en continu et évaluées en continu pour détecter (121) les éléments, et
- l'unité de commande de machine (75) est configurée (124) en continu tout en exécutant (125) automatiquement au moins partiellement une phase de l'opération de terrassement.

14. Procédé (100) selon l'une quelconque des revendications 9 à 13, dans lequel
- l'opération de terrassement comprend la construction d'un fossé (30),
- la ligne souhaitée est une ligne de fossé, en particulier une ligne de bord de fossé,
- la première phase est un passage de marquage le long de la ligne de fossé et
- les éléments produits par le passage de marquage comprennent un bord (35, 39) et/ou une surface,
en particulier dans lequel
- la machine de construction (1) est une niveleuse ;
- l'opération de terrassement comprend le creusement d'un fossé en V ; et/ou
- la ligne de fossé est une ligne de bord de fossé, une spline de fossé ou une spline de bord de fossé.

15. Produit logiciel comprenant un code de programme qui est stocké sur un support lisible par machine, ou qui est matérialisé par une onde électromagnétique comprenant un segment de code de programme, et comportant des instructions exécutables par ordinateur pour mettre en œuvre, en particulier lorsqu'il est exécuté sur une unité de calcul (71) d'un système (70) selon l'une quelconque des revendications 1 à 7, le procédé (100) selon l'une quelconque des revendications 9 à 14.
